(19) **Europäisches Patentamt / European Patent Office / Office européen des brevets**

(11) **EP 1 578 030 B1**

(12) **EUROPEAN PATENT SPECIFICATION**

(45) Date of publication and mention
of the grant of the patent:
**03.12.2008   Bulletin 2008/49**

(51) Int Cl.:
***H04B 7/005*** (2006.01)

(21) Application number: **05104850.2**

(22) Date of filing: **22.03.2000**

(54) **Weighted open loop power control in a time division duplex communication system**

Leistungsregelung mit gewichteter offener Schleife in einem Zeitduplex-Kommunikationssystem

Commande de puissance en boucle ouverte pondérée dans un système de communication duplex à répartition dans le temps

(84) Designated Contracting States:
**AT BE CH CY DE DK ES FI FR GB GR IE IT LI LU MC NL PT SE**

(30) Priority: **22.03.1999   US 125417 P**
**28.05.1999   US 136556 P**
**28.05.1999   US 136557 P**

(43) Date of publication of application:
**21.09.2005   Bulletin 2005/38**

(60) Divisional application:
**08167691.8**

(62) Document number(s) of the earlier application(s) in accordance with Art. 76 EPC:
**03013811.9 / 1 349 294**
**00921420.6 / 1 163 738**

(73) Proprietor: **INTERDIGITAL TECHNOLOGY CORPORATION**
**Wilmington, DE 19801 (US)**

(72) Inventors:
• **Zeira, Ariela**
**Trumball,**
**Connecticut 06611 (US)**
• **Shin, Sung-Hyuk**
**Fort Lee,**
**New Jersey 07024 (US)**

(74) Representative: **Pierrou, Mattias et al**
**Awapatent AB**
**P.O. Box 45 086**
**104 30 Stockholm (SE)**

(56) References cited:
**EP-A- 0 610 030**          **EP-A2- 0 682 419**
**WO-A-97/49197**          **WO-A2-99/07105**

**Description**

This invention generally relates to spread spectrum time division duplex (TDD) communication systems. More particularly, the present invention relates to a base station comprising means for controlling transmission power.

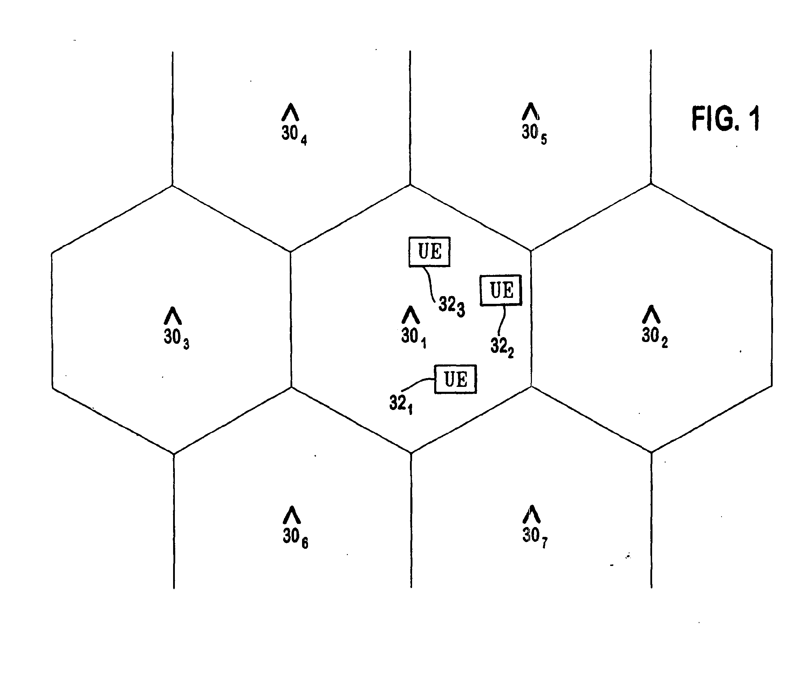

**Figure 1** depicts a wireless spread spectrum time division duplex (TDD) communication system. The system has a plurality of base stations $30_1$-$30_7$. Each base station $30_1$ communicates with user equipments (UEs) $32_1$-$32_3$ in its operating area. Communications transmitted from a base station $30_1$ to a UE $32_1$ are referred to as downlink communications and communications transmitted from a UE $32_1$ to a base station $30_1$ are referred to as uplink communications.

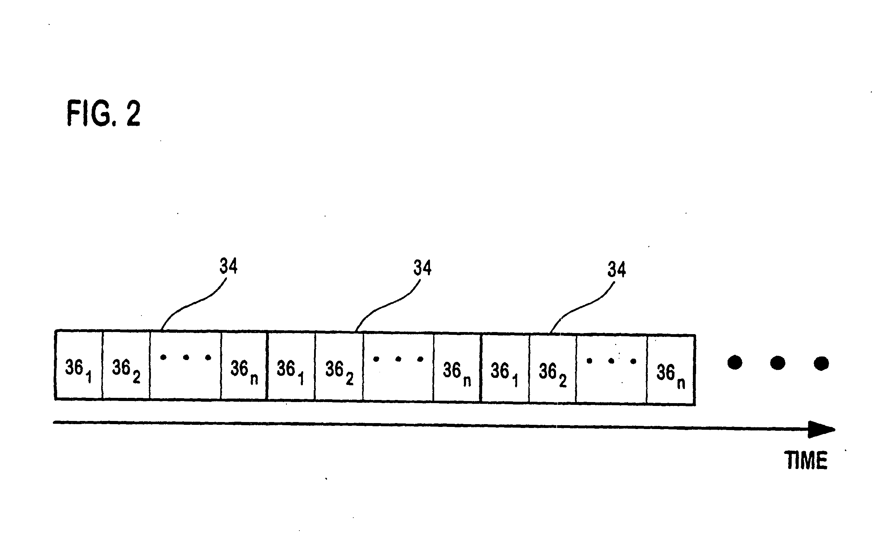

In addition to communicating over different frequency spectrums, spread spectrumTDD systems carry multiple communications over the same spectrum. The multiple signals are distinguished by their respective chip code sequences (codes). Also, to more efficiently use the spread spectrum, TDD systems as illustrated in **Figure 2** use repeating frames **34** divided into a number of time slots $36_1$-$36_n$, such as fifteen time slots. In such systems, a communication is sent in selected time slots $36_1$-$36_n$ using selected codes. Accordingly, one frame **34** is capable of carrying multiple communications distinguished by both time slot $36_1$-$36_n$ and code. The use of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach using transmission power control in a code division multiple access (CDMA) communication system is described in U.S. Patent No. 5,056,109 (Gilhousen et al.). A transmitter sends a communication to a particular receiver. Upon reception, the received signal power is measured. The received signal power is compared to a desired received signal power. Based on the comparison, a control bit is sent to the transmitter either increasing or decreasing transmission power by a fixed amount. Since the receiver sends a control signal to the transmitter to control the transmitter's power level, such power control techniques are commonly referred to as closed loop.

Under certain conditions, the performance of closed loop systems degrades. For instance, if communications sent between a UE $32_1$ and a base station $30_1$ are in a highly dynamic environment, such as due to the UE $32_1$ moving, such systems may not be able to adapt fast enough to compensate for the changes. The update rate of closed loop power control in a typical TDD system is **100** cycles per second which is not sufficient for fast fading channels. Accordingly, there is a need for alternate approaches to maintain signal quality and low transmission power levels.

EP-A-0 610 030 discloses a transmit power control system for use in a TDD/CDMA communication system. A radio telephone receives a communication in a reception time slot and measures its power level. Based on the reception power level, the transmit power level in a transmission time slot is controlled.

EP-A-0 462 952 discloses a method for regulating or adjusting transmission power for signals between a mobile station and a base station in a digital mobile telephony system. To determine the transmission power level, the mean values of the signal strength and signal transmission quality are determined. Based on the mean values, an anticipated signal strength and signal quality are calculated for a subsequent time period, assuming the transmission power is maintained unchanged. The transmission power level at the subsequent time period is adjusted based on the anticipated values.

International patent application WO 97/49197 discloses, in packet switched data transfer of a cellular radio system, closed-loop control as well as open-loop control of transmission power. Before forming a connection and during long pauses between the packets, a terminal device measures a control signal transmitted by a base station and compares its signal power to a target level that is included by the base station in the control signal as a parameter. The base station informs of the transmission power in the control signal, whereby the terminal device sets the same power to be its transmission power, corrected by the difference between the target level and a measured quality of the link.

**SUMMARY**

The invention controls transmission power levels in a spread spectrum time division duplex base station as defined in claim 1.

**BRIEF DESCRIPTION OF THE DRAWINGS**

**Figure 1** illustrates a prior art TDD system.

**Figure 2** illustrates time slots in repeating frames of a TDD system.

**Figure 3** is a flow chart of weighted open loop power control.

**Figure 4** is a diagram of components of two communication stations using weighted open loop power control.

**Figure 5** depicts a graph of the performance of a weighted open loop, open loop and closed loop power control system for a UE moving at 30 kilometers per hour (km/h).

**Figure 6** depicts a graph of the three systems' performance for a UE moving at 60 km/h.

**DETAILED DESCRIPTION OF THE PREFERRED EMBODIMENTS**

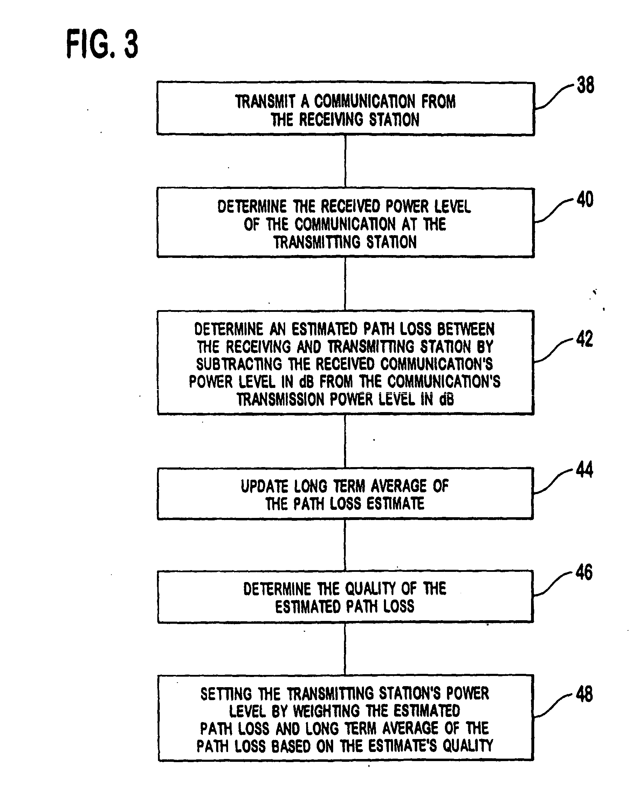

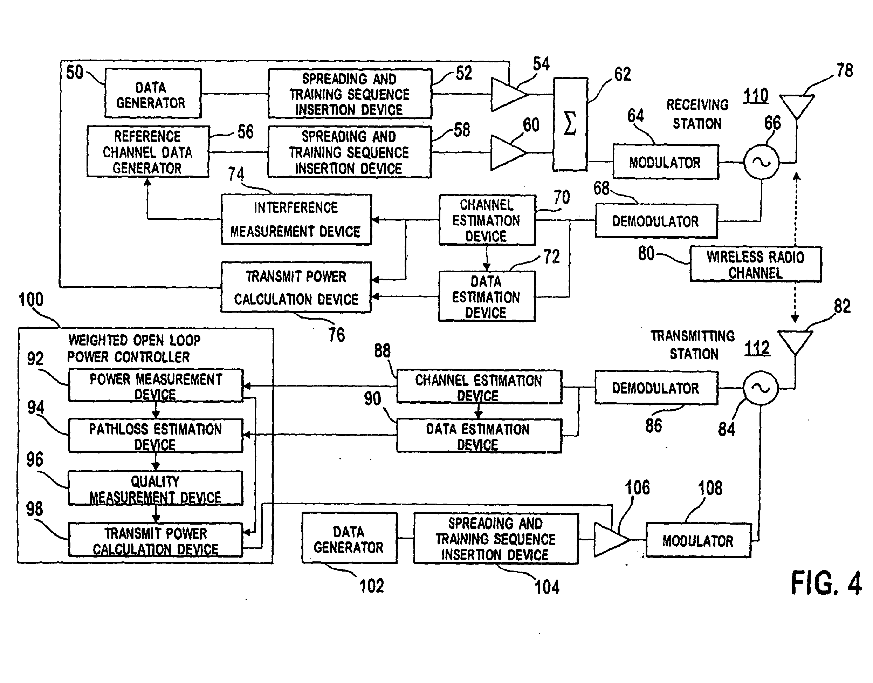

The preferred embodiments will be described with reference to the drawing figures where like numerals represent like elements throughout. Weighted open loop power control will be explained using the flow chart of **Figure 3** and the components of two simplified communication stations **110, 112** as shown in **Figure 4.** For the following discussion, the communication station having its transmitter's power controlled is referred to as the transmitting station **112** and the communication station receiving power controlled communications is referred to as the receiving station **110**. Since weighted open loop power control may be used for uplink, downlink or both types of communications, the transmitter having its power controlled may be located at a base station $30_1$, UE $32_1$ or both. Accordingly, if both uplink and downlink power control are used, the receiving and transmitting station's components are located at both the base station $30_1$ and UE $32_1$. For use in estimating the path loss between the receiving and transmitting stations **110,112,** the receiving station **110** sends a communication to the transmitting station **112**. The communication may be sent on any one of various channels. Typically, in a TDD system, the channels used for estimating path loss are referred to as reference channels, although other channels may be used. If the receiving station **110** is a base station $30_1$, the communication is preferably sent over a downlink common channel or a Common Control Physical Channel (CCPCH).

Data to be communicated to the transmitting station **112** over the reference channel is referred to as reference channel data. The reference channel data is generated by a reference channel data generator **56**. The reference data is assigned one or multiple resource units based on the communication's bandwidth requirements. A spreading and training sequence insertion device **58** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier **60**. The amplified communication burst may be summed by a sum device **62** with any other communication burst created through devices, such as a data generator 50, spreading and training sequence insertion device **52** and amplifier **54**. The summed communication bursts are modulated by a modulator **64**. The modulated signal is passed through an isolator **66** and radiated by an antenna **78** as shown or, alternately, through an antenna array, step **38.** The radiated signal is passed through a wireless radio channel **80** to an antenna **82** of the transmitting station **112**. The type of modulation used for the transmitted communication can be any of the those known to those skilled in the art, such as direct phase shift keying (DPSK) or quadrature phase shift keying (QPSK).

The antenna **82** or, alternately, antenna array of the transmitting station **112** receives various radio frequency signals. The received signals are passed through an isolator 84 to a demodulator 86 to produce a baseband signal. The baseband signal is processed, such as by a channel estimation device 88 and a data estimation device 90, in the time slots and with the appropriate codes assigned to the communication's burst. The channel estimation device **88** commonly uses the training sequence component in the baseband signal to provide channel information, such as channel impulse responses. The channel information is used by the data estimation device 90 and a power measurement device **92**. The power level of the processed communication corresponding to the reference channel, $R_{TS}$, is measured by the power measurement device **92** and sent to a pathloss estimation device **94,** step **40.** The channel estimation device **88** is capable of separating the reference channel from all other channels. If an automatic gain control device or amplifier is used for processing the received signals, the measured power level is adjusted to correct for the gain of these devices at either the power measurement device 92 or the pathloss estimation device **94.**

To determine the path loss, L, the transmitting station 112 also requires the communication's transmitted power level, $T_{RS}$. The transmitted power level, $T_{RS}$, may be sent along with the communication's data or in a signaling channel. If the power level, $T_{RS}$, is sent along with the communication's data, the data estimation device **90** interprets the power level and sends the interpreted power level to the pathloss estimation device **94**. If the receiving station **110** is a base station $30_1$, preferably the transmitted power level, $T_{RS}$, is sent via the broadcast channel (BCH) from the base station $30_1$. By subtracting the received communication's power level, $R_{TS}$ in dB, from the sent communication's transmitted power level, $T_{RS}$ in dB, the pathloss estimation device **94** estimates the path loss, L, between the two stations **110,112,** step **42.** Additionally, a long term average of the pathloss, $L_0$, is updated, step **44.** In certain situations, instead of transmitting the transmitted power level, $T_{RS}$, the receiving station **110** may transmit a reference for the transmitted power level. In that case, the pathloss estimation device **94** provides reference levels for the path loss, L, and the long term average of the path loss, $L_0$.

Since TDD systems transmit downlink and uplink communications in the same frequency spectrum, the conditions these communications experience are similar. This phenomenon is referred to as reciprocity. Due to reciprocity, the path loss experienced for the downlink will also be experienced for the uplink and vice versa. By adding the estimated path loss to a desired received power level, a transmission power level for a communication from the transmitting station **112** to the receiving station **110** is determined. This power control technique is referred to as open loop power control.

Open loop systems have drawbacks. If a time delay exists between the estimated path loss and the transmitted communication, the path loss experienced by the transmitted communication may differ from the calculated loss. In TDD where communications are sent in differing time slots $36_1$-$36_n$, the time slot delay between received and transmitted communications may degrade the performance of an open loop power control system. To overcome these drawbacks, a quality measurement device **96** in a weighted open loop power controller **100** determines the quality of the estimated path loss, step **46.** The quality measurement device **96** also weights the estimated path loss, L, and long term average of the pathloss, $L_0$, to set the transmit power level by transmit power calculation device **98**, step **48.** As illustrated in **Figure 4,** the weighted open loop power controller **100** consists of the power measurement device **92**, pathloss estimation device **94,** quality measurement device **96,** and transmit power calculation device **98.**

The following is one of the preferred weighted open loop power control algorithms. The transmitting station's power level in decibels, $P_{TS}$, is determined using **Equation 1.**

$$P_{TS} = P_{RS} + \alpha(L\text{-}L_0) + L_0 + \text{CONSTANT VALUE} \qquad \textbf{Equation 1}$$

$P_{RS}$ is the power level that the receiving station **110** desires to receive the transmitting station's communication in dB. $P_{RS}$ is determined by the desired SIR, $SIR_{TARGET}$, at the receiving station **110** and the interference level, $I_{RS}$, at the receiving station **110.**

To determine the interference level, $I_{RS}$, at the receiving station, received communications from the transmitting station **112** are demodulated by a demodulator **68**. The resulting baseband signal is processed, such as by a channel estimation device **70** and a data estimator device **72** in the time slots and with the appropriate codes assigned the transmitting station's communications. The channel information produced by the channel estimation device **70** is used by an interference measurement device **74** to determine the interference level, $I_{RS}$. The channel information may also be used to control the transmit power level of the receiving station **110**. The channel information is input to a data estimation device **72** and a transmit power calculation device **76.** The data estimation produced by the data estimation device **72** is used with the channel information by the transmit power calculation device **76** to control the amplifier **54** which controls the receiving station's transmit power level.

$P_{RS}$ is determined using **Equation 2.**

$$P_{RS} = SIR_{TARGET} + I_{RS} \qquad \textbf{Equation 2}$$

$I_{RS}$ is either signaled or broadcasted from the receiving station **110** to the transmitting station **112.** For downlink power control, $SIR_{TARGET}$ is known at the transmitting station **112.** For uplink power control, $SIR_{TARGET}$ is signaled from the receiving station **110** to the transmitting station **112.** Using **Equation 2, Equation 1** is rewritten as either **Equations 3** or **4.**

$$P_{TS} = SIR_{TARGET} + I_{RS} + \alpha(L\text{-}L_0) + L_0 + \text{CONSTANT VALUE} \qquad \textbf{Equation 3}$$

$$P_{TS} = \alpha\,L + (1\text{-}\alpha)L_0 + I_{RS} + SIR_{TARGET} + \text{CONSTANT VALUE} \qquad \textbf{Equation 4}$$

L is the path loss estimate in decibels, $T_{RS}$ - $R_{TS}$, for the most recent time slot $36_1$-$36_n$ that the path loss was estimated. The long term average of the pathloss, $L_0$, is a running average of the path loss estimates L. The CONSTANT VALUE is a correction term. The CONSTANT VALUE corrects for differences in the uplink and downlink channels, such as to compensate for differences in uplink and downlink gain. Additionally, the CONSTANT VALUE may provide correction if the transmit power reference level of the receiving station is transmitted, instead of the actual transmit power, $T_{RS}$. If the receiving station is a base station $30_1$, the CONSTANT VALUE is preferably sent via Layer 3 signaling. If the receiving station is a base station $30_1$, the CONSTANT VALUE is preferably sent via Layer 3 signaling.

The weighting value, $\alpha$, determined by the quality measurement device **94,** is a measure of the quality of the estimated path loss and is, preferably, based on the number of time slots $36_1\text{-}36_n$ between the time slot, n, of the last path loss estimate and the first time slot of the communication transmitted by the transmitting station **112.** The value of $\alpha$ is from zero to one. Generally, if the time difference between the time slots is small, the recent path loss estimate will be fairly accurate and $\alpha$ is set at a value close to one. By contrast, if the time difference is large, the path loss estimate may not be accurate and the long term average path loss measurement is most likely a better estimate for the path loss. Accordingly, $\alpha$ is set at a value closer to zero.

**Equation 5** is one equation for determining a, although others may be used.

$$\alpha = 1 - (D - 1)/D_{max} \qquad\qquad \textbf{Equation 5}$$

The value, D, is the number of time slots $36_1\text{-}36_n$ between the time slot of the last path loss estimate and the first time slot of the transmitted communication which will be referred to as the time slot delay. If the delay is one time slot, $\alpha$ is one. $D_{max}$ is the maximal possible delay. A typical value for a frame having fifteen time slots is six. If the delay is $D_{max}$ or greater, $\alpha$ approaches zero. Using the transmit power level, $P_{TS}$, determined by a transmit power calculation device **98,** the weighted open loop power controller **100** sets the transmit power of the transmitted communication, step **48.**

Data to be transmitted in a communication from the transmitting station **112** is produced by a data generator **102.** The communication data is spread and time-multiplexed with a training sequence by the spreading and training sequence insertion device **104** in the appropriate time slots and codes of the assigned resource units. The spread signal is amplified by the amplifier **106** and modulated by the modulator **108** to radio frequency.

The weighted open loop power controller **100** controls the gain of the amplifier **106** to achieve the determined transmit power level, $P_{TS}$, for the communication. The communication is passed through the isolator **84** and radiated by the antenna **82.**

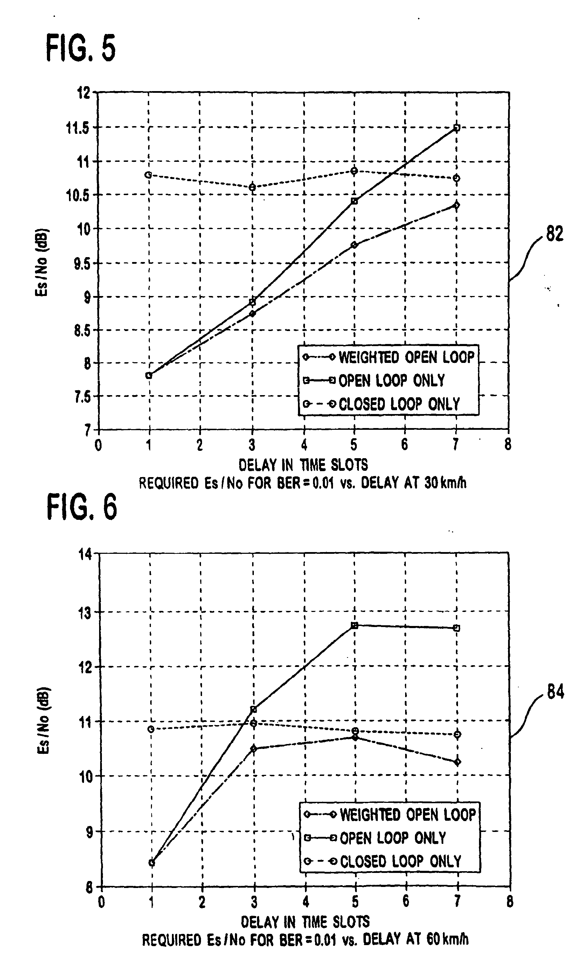

**Figures 5** and **6** depict graphs **82, 84** illustrating the performance of a weighted open loop system using **Equation 4. Equation 5** is used to calculate $\alpha$. These graphs **82, 84** depict the results of simulations comparing the performance of a weighted open loop, an open loop and a closed loop system controlling the transmission power level of the transmitting station **112.** The simulations address the performance of these systems in a fast fading channel under steady-state conditions. In this example, the receiving station is a base station $30_1$ and the transmitting station is a UE $32_1$. For the simulation, the UE $32_1$ was a mobile station. The simulated base station $30_1$ used two antenna diversity for reception with each antenna having a three finger RAKE receiver. The simulation approximated a realistic channel and SIR estimation based on a midamble sequence of burst type 1 field in the presence of additive white Gaussian noise (AWGN). The simulation used an International Telecommunication Union (ITU) Pedestrian B type channel and QPSK modulation. Interference levels were assumed to be accurately known with no uncertainty. Channel coding schemes were not considered. The CONSTANT VALUE and $L_0$ were set at 0 db.

For each of the power control techniques, **Figure 5,** graph **82** shows the energy for a transmitted complex symbol in decibels (Es/No) required to maintain a BER of 1% for various time slot delays, D, with the UE $32_1$ moving at 30 kilometers per hour (km/h). As shown, at lower time slot delays, both weighted open loop and open loop outperform closed loop. For higher time slot delays, weighted open loop outperforms both open loop and closed loop. As shown in **Figure 6,** graph **84,** similar results occur if the UE $32_1$ is traveling at 60 km/h.

**Claims**

1.    A base station employing a spread spectrum time division duplex technique using frames with time slots for communication, comprising: means (82) for receiving, in a first time slot, a first communication having a transmit power level and for receiving the transmit power level, a measured interference level and a target signal to interference ratio from a user equipment, means (92) for measuring a power level of the first communication; means (94) for determining a path loss estimate based in part on the measured power level and the transmit power level of the first communication; and means (102, 104, 106, 108) for transmitting a second communication in a second time slot at a set transmission power level to the user equipment; the base station being **characterized in** comprising:

means (94) for determining a long term pam loss estimate based on prior path loss estimates of communications received from the user equipment;

means (98) for setting the transmission power level for the second communication in the second time slot by adding the path loss estimate weighted by a first factor $\alpha$, having a value from zero to one, to the long term path loss estimate weighted by a second factor $(1-\alpha)$, to the measured interference level, to the target signal to interference ratio and to a constant value, wherein $\alpha$ is a quality of the path loss measurement.

2. The base station of claim 1 wherein said means (94) for determining the long term path loss estimate is responsive at least in part upon an average of path loss estimates of received communications from the user equipment.

3. The base station of claim 1 further comprising:

    means (96) for determining a based in part on a number of time slots, D, between the first and second time slot.

4. The base station of claim 3 wherein a maximum time slot delay is $D_{max}$ and the determined quality, $\alpha$, is determined by:

$$\alpha = 1 - (D-1)/D_{max}.$$

**Patentansprüche**

1. Basisstation, welche eine Spreizspektrum-Zeitduplextechnik unter Verwendung von Rahmen mit Zeitschlitzen zur Kommunikation verwendet, welche aufweist: eine Einrichtung (82), um in einem ersten Zeitschlitz eine erste Kommunikation mit einem Sendeleistungspegel zu empfangen und um den Sendeleistungspegel, einen gemessenen Interferenzpegel und ein Ziel-Signal-zu-Interferenz-Verhältnis von einem Benutzergerät zu empfangen, eine Einrichtung (92) zum Messen des Leistungspegels der ersten Kommunikation, eine Einrichtung (94) zum Bestimmen einer Pfadverlustschätzung, die teilweise auf dem gemessenen Leistungspegel und dem Sendeleistungspegel der ersten Kommunikation beruht, und eine Einrichtung (102, 104, 106, 108) zum Senden einer zweiten Kommunikation in einem zweiten Zeitschlitz bei einem festgelegten Sendeleistungspegel zu dem Benutzergerät, wobei die Basisstation **dadurch gekennzeichnet ist, dass** sie aufweist:

    eine Einrichtung (94) zum Bestimmen einer Langzeit-Pfadverlustschätzung auf der Grundlage früherer Pfadverlustschätzungen von dem Benutzergerät empfangener Kommunikationen,
    eine Einrichtung (98) zum Festlegen des Sendeleistungspegels für die zweite Kommunikation in dem zweiten Zeitschlitz durch Addieren der durch einen ersten Faktor $\alpha$, der einen Wert von 0 bis 1 aufweist, gewichteten Pfadverlustschätzung zu der durch einen zweiten Faktor $(1 - \alpha)$ gewichteten Langzeit-Pfadverlustschätzung, zu dem gemessenen Interferenzpegel, zu dem Ziel-Signal-zu-Interferenz-Verhältnis und zu einem konstanten Wert, wobei $\alpha$ eine Qualität der Pfadverlustmessung ist.

2. Basisstation nach Anspruch 1, wobei die Einrichtung (94) zum Bestimmen der Langzeit-Pfadverlustschätzung zumindest teilweise auf einen Durchschnitt von Pfadverlustschätzungen empfangener Kommunikationen von dem Benutzergerät anspricht.

3. Basisstation nach Anspruch 1, welche ferner aufweist:

    eine Einrichtung (96) zum Bestimmen von $\alpha$ teilweise auf der Grundlage der Anzahl der Zeitschlitze D zwischen dem ersten und dem zweiten Zeitschlitz.

4. Basisstation nach Anspruch 3, wobei die maximale Zeitschlitzverzögerung $D_{max}$ ist und die bestimmte Qualität $\alpha$ bestimmt ist durch

$$\alpha \ = \ 1 \ - \ (D \ - \ 1) / D_{max}.$$

## Revendications

1. Station de base employant une technique de duplexage par répartition dans le temps par étalement du spectre utilisant des trames avec des intervalles de temps pour la communication, comprenant : un moyen (82) permettant de recevoir, dans un premier intervalle de temps, une première communication ayant un niveau de puissance d'émission, et de recevoir le niveau de puissance d'émission, un niveau d'interférence mesurée, et un rapport signal cible sur interférence en provenance d'un équipement utilisateur, un moyen (92) permettant de mesurer un niveau de puissance de la première communication ; un moyen (94) permettant de déterminer une estimation d'affaiblissement de la propagation basée en partie sur le niveau de puissance mesurée et le niveau de puissance d'émission de la première communication ; et des moyens (102, 104, 106, 108) permettant d'émettre une seconde communication dans un second intervalle de temps à un niveau de puissance d'émission défini vers l'équipement utilisateur, la station de base étant **caractérisée en ce qu'**elle comprend :

   un moyen (94) permettant de déterminer une estimation d'affaiblissement de la propagation à long terme basée sur les précédentes estimations d'affaiblissement de la propagation des communications reçues en provenance de l'équipement utilisateur ;
   un moyen (98) permettant de régler le niveau de puissance d'émission pour la seconde communication dans le second intervalle de temps en ajoutant l'estimation d'affaiblissement de propagation pondérée par un premier facteur α, ayant une valeur comprise entre zéro et un, à l'estimation d'affaiblissement de la propagation à long terme pondérée par un second facteur (1 - α), au niveau d'interférence mesurée, au rapport signal cible sur interférence et à une valeur constante, dans lequel α est une qualité de la mesure de l'affaiblissement de la propagation.

2. Station de base selon la revendication 1, dans laquelle ledit moyen (94) permettant de déterminer l'estimation d'affaiblissement de la propagation à long terme réagit au moins en partie à une moyenne d'estimations d'affaiblissement de la propagation de communications reçues en provenance de l'équipement utilisateur.

3. Station de base selon la revendication 1 comprenant en outre :

   un moyen (96) permettant de déterminer α, basé en partie sur un certain nombre d'intervalles de temps, D, entre le premier et le second intervalle de temps.

4. Station de base selon la revendication 3, dans laquelle un retard d'intervalle de temps maximum est $D_{max}$ et la qualité déterminée, α, est déterminée par :

$$\alpha \ = \ 1 \ - \ (D \ - \ 1) / D_{max}$$

FIG. 1

$30_4$   $30_5$

$30_3$   $30_1$   UE $32_3$   UE $32_2$   $30_2$

UE $32_1$

$30_6$   $30_7$

EP 1 578 030 B1

# FIG. 2

# FIG. 3

TRANSMIT A COMMUNICATION FROM
THE RECEIVING STATION — 38

DETERMINE THE RECEIVED POWER LEVEL
OF THE COMMUNICATION AT THE
TRANSMITTING STATION — 40

DETERMINE AN ESTIMATED PATH LOSS BETWEEN
THE RECEIVING AND TRANSMITTING STATION BY
SUBTRACTING THE RECEIVED COMMUNICATION'S
POWER LEVEL IN dB FROM THE COMMUNICATION'S
TRANSMISSION POWER LEVEL IN dB — 42

UPDATE LONG TERM AVERAGE OF
THE PATH LOSS ESTIMATE — 44

DETERMINE THE QUALITY OF THE
ESTIMATED PATH LOSS — 46

SETTING THE TRANSMITTING STATION'S POWER
LEVEL BY WEIGHTING THE ESTIMATED
PATH LOSS AND LONG TERM AVERAGE OF THE
PATH LOSS BASED ON THE ESTIMATE'S QUALITY — 48

FIG. 4

RECEIVING STATION

TRANSMITTING STATION

WIRELESS RADIO CHANNEL

78
82
110
112
66
84
64 MODULATOR
68 DEMODULATOR
80
86 DEMODULATOR
108 MODULATOR
106
62 Σ
54
60
52 SPREADING AND TRAINING SEQUENCE INSERTION DEVICE
58 SPREADING AND TRAINING SEQUENCE INSERTION DEVICE
56 REFERENCE CHANNEL DATA GENERATOR
50 DATA GENERATOR
70 CHANNEL ESTIMATION DEVICE
72 DATA ESTIMATION DEVICE
74 INTERFERENCE MEASUREMENT DEVICE
76 TRANSMIT POWER CALCULATION DEVICE
88 CHANNEL ESTIMATION DEVICE
90 DATA ESTIMATION DEVICE
104 SPREADING AND TRAINING SEQUENCE INSERTION DEVICE
102 DATA GENERATOR
100 WEIGHTED OPEN LOOP POWER CONTROLLER
92 POWER MEASUREMENT DEVICE
94 PATHLOSS ESTIMATION DEVICE
96 QUALITY MEASUREMENT DEVICE
98 TRANSMIT POWER CALCULATION DEVICE

## FIG. 5

REQUIRED Es / No FOR BER = 0.01 vs. DELAY AT 30 km/h

## FIG. 6

REQUIRED Es / No FOR BER = 0.01 vs. DELAY AT 60 km/h

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5056109 A, Gilhousen
- EP 0610030 A
- EP 0462952 A
- WO 9749197 A